# EUROPEAN PATENT APPLICATION

(11) **EP 4 815 132 A1**
(43) Date of publication of application: **30.09.2026**
(21) Application number: 26166988.1
(22) Date of filing: 24.03.2026
(51) Int. Cl.: H01M 50/207, B60L 50/64, H01M 50/249, H01M 50/298

(54) **BATTERY PACK**

(30) Priority: 26.03.2025 JP 2025052555
(71) Applicant: Toyota Jidosha Kabushiki Kaisha, Toyota-shi, Aichi-ken 471-8571 (JP)
(72) Inventor: YONEZAWA, Shota, Toyota-shi, Aichi-ken, 471-8571 (JP); MARUHASHI, Motokuni, Toyota-shi, Aichi-ken, 471-8571 (JP); KUMAZAWA, Kazuya, Toyota-shi, Aichi-ken, 471-8571 (JP); KIMURA, Kenta, Toyota-shi, Aichi-ken, 471-8571 (JP); KAWAMOTO, Naoya, Toyota-shi, Aichi-ken, 471-8571 (JP)
(74) Representative: TBK

(57) **Abstract**

A battery pack 13 includes a battery case 40 and an equipment case 50 arranged above the battery case. The battery pack 13 also includes an electrical connection member 70 configuring at least part of wiring for connecting a first component 20 inside the battery case 40 to a second component 30 inside the equipment case 50. The battery case 40 includes an upper wall 44 provided with an upper wall opening portion 44H, and the equipment case 50 includes a lower wall 53 provided with a lower wall opening portion 53H, with the electrical connection member 70 provided so as to pass through both the upper wall opening portion 44H and the lower wall opening portion 53H.

## Description

### BACKGROUND

### Technical Field

The present disclosure relates to a battery pack.

### Background Art

Japanese Patent Application Laid-Open (JP-A) No. 2020-173918 discloses a vehicle including a battery pack (power storage device) arranged below a vehicle cabin. The battery pack includes a battery including plural power storage modules, battery equipment such as a junction block, and a housing case to house these. The junction block is housed in the vicinity of a front end of the housing case.

### SUMMARY OF INVENTION

### Technical Problem

However, there is room for improvement in the configuration of a housing case in a battery pack, the arrangement of battery equipment such as a junction block, wiring inside the housing case, and the like.

An object of the present disclosure is, when a housing case of a battery pack includes a battery case and an equipment case, to connect a first component inside the battery case and a second component inside the equipment case together by an efficient route.

### Solution to Problem

A battery pack according to a first aspect is a battery pack for installation in a vehicle, with the battery pack including a battery case housing a battery, an equipment case arranged above the battery case such that at least part of the equipment case overlaps with at least part of the battery case in plan view, and an electrical connection member configuring at least part of wiring for connecting a first component inside the battery case to a second component inside the equipment case. The battery case includes an upper wall provided with an upper wall opening portion, the equipment case includes a lower wall provided with a lower wall opening portion, and the electrical connection member is provided so as to pass through both the upper wall opening portion and the lower wall opening portion.

In the present aspect, the battery pack includes the battery case housing the battery, and the equipment case arranged above the battery case such that at least part of the equipment case overlaps with at least part of the battery case in plan view.

In a battery pack as described above, a need arises to electrically connect the first component inside the battery case and the second component inside the equipment case together.

Thus in the present aspect, the battery pack includes the electrical connection member configuring at least part of the wiring for connecting the first component inside the battery case to the second component inside the equipment case. The battery case includes the upper wall provided with the upper wall opening portion, and the equipment case includes the lower wall provided with the lower wall opening portion, with the electrical connection member being provided so as to pass through both the upper wall opening portion and the lower wall opening portion.

This thereby enables the first component inside the battery case and the second component inside the equipment case to be connected together by an efficient route.

Note that in exemplary embodiments described later the second component is arranged above the first component such that at least part of the second component overlaps with at least part of the first component in plan view. However, the present aspect is not limited thereto.

Note that in exemplary embodiments described later the electrical connection member is a bus bar, however, the present aspect is not limited thereto. For example, the electrical connection member may be a wiring harness. Note that the term "bus bar" in the present disclosure means a member having the objective of electrical connection, and encompasses a bus bar main body formed from a conductive material (such as copper or aluminum).

Note that although in exemplary embodiments described later the first component is a battery and the second component is a junction block, the present aspect is not limited thereto.

Note that although in exemplary embodiments described later the electrical connection member configures the entire wiring for connecting the first component and the second component together, the present aspect is not limited thereto.

A battery pack according to a second aspect is the first aspect, wherein the electrical connection member includes a first connection member attached to a member on the first component side, and a second connection member attached to a member on the second component side.

In the first aspect the electrical connection member includes a first connection member attached to the first component side member, and the second connection member attached to the second component side member.

The electrical connection member can accordingly be divided into the first connection member and the second connection member, enabling a task of connecting the first component side member and the second component side member together to be made easy.

Note that although in exemplary embodiments described later the first component side member is the first component itself, the present aspect is not limited thereto.

Note that although in exemplary embodiments described later the second component side member is the second component itself, the present aspect is not limited thereto.

A battery pack according to a third aspect is the second aspect, wherein the first connection member is a bus bar, and the second connection member is a bus bar.

In the present aspect the first connection member is a bus bar, and the second connection member is a bus bar.

This accordingly makes the present aspect appropriate to, for example, flowing large currents.

Note that although in an exemplary embodiment described later the bus bar serving as the first connection member includes a connector section including a connector housing, and the bus bar serving as the second connection member includes a connector section including a connector housing, the present aspect is not limited thereto.

A battery pack according to a fourth aspect is the second or third aspect, wherein the first connection member includes a first side connection section connected to the first component side member, and a first side connector section connected to the second connection member, the second connection member includes a second side connection section connected to the second component side member, and a second side connector section connected to the first side connector section, and the second side connector section is connected to the first side connector section from above.

In the present aspect the first connection member includes the first side connection member connected to the first component side member, and the first side connector section connected to the second connection member. The second connection member includes the second side connection section connected to the second component side member and the second side connector section connected to the first side connector section.

The second side connector section is connected to the first side connector section from above.

This thereby enables a task of connecting the second side connector section to the first side connector section to be made easy.

A battery pack according to fifth aspect is the fourth aspect, wherein the first side connector section and the second side connector section are arranged so as not to overlap with the first component and the second component in plan view.

In the present aspect the first side connector section and the second side connector section are arranged so as not to overlap with the first component and the second component in plan view.

This means there is no need to provide a space for arranging the first side connector section and the second side connector section in a region overlapping with the first component or the second component in plan view, enabling the first component and the second component to be arranged in close proximity to each other in the height direction.

Note that in exemplary embodiments described later the first side connector section and the second side connector section are arranged rearward of the first component and the second component. However, the present aspect is not limited thereto. For example, the first side connector section and the second side connector section may be arranged forward of the first component and the second component.

A battery pack according to a sixth aspect is the fourth aspect or the fifth aspect, wherein the first side connector section includes a fixed portion fixed to the battery case.

In the present aspect the first side connector section includes the fixed portion fixed to the battery case.

This thereby enables the first side connector side of the first side connection member to be suppressed from being a free end.

A battery pack related to a seventh aspect is any one of the fourth to sixth aspects, wherein a connector configured by the first side connector section and the second side connector section is arranged so as to straddle between inside the battery case and inside the equipment case in a state passing through both the upper wall opening portion and the lower wall opening portion.

In the present aspect, the connector configured by the first side connector section and the second side connector section is arranged so as to straddle between inside the battery case and inside the equipment case in a state passing through both the upper wall opening portion and the lower wall opening portion.

This thereby enables the space inside the upper wall opening portion and the lower wall opening portion to be utilized for placement of the connector.

A battery pack according to an eight aspect is any one of the first to seventh aspects, wherein the upper wall opening portion and the lower wall opening portion connect a space rearward of a space inside the battery case where the battery is arranged, and a space rearward of a space inside the equipment case where a junction block is arranged, together in a height direction.

In the present aspect, the upper wall opening portion and the lower wall opening portion connect the space rearward of the space inside the battery case where the battery is arranged, and the space rearward of the space inside the equipment case where the junction block is arranged, together in the height direction.

This thereby enables these spaces to be utilized efficiently to perform electrical connection.

A battery pack according to a ninth aspect is any one of the first to eighth aspects, wherein the battery pack further comprises a sealing member arranged between the upper wall of the battery case and the lower wall of the equipment case, and the sealing member is provided so as to surround the upper wall opening portion and the lower wall opening portion.

In the present aspect, the battery pack includes the sealing member arranged between the upper wall of the battery case and the lower wall of the equipment case. The sealing member is provided so as to surround the upper wall opening portion and the lower wall opening portion.

This thereby enables the waterproofing properties of the battery case and the equipment case to be secured.

Note that although in exemplary embodiments described later the sealing member is a liquid gasket, the sealing member of the present aspect is not limited thereto. For example, the sealing member may be a soft gasket made from rubber or the like.

The battery pack according to a tenth aspect is the ninth aspect, wherein the lower wall of the equipment case includes a projection portion projecting downward at positions surrounding the lower wall opening portion.

In the present aspect the lower wall of the equipment case includes the projection portion projecting downward at positions surrounding the lower wall opening portion.

This thereby enables the waterproofing properties at the periphery of the upper wall opening portion and the lower wall opening portion to be secured easily.

A battery pack according to an eleventh aspect is the tenth aspect, wherein an air layer is formed between the upper wall of the battery case and the lower wall of the equipment case.

In the present aspect, the air layer is formed between the upper wall of the battery case and the lower wall of the equipment case.

This thereby enables a better heat insulation effect to be obtained between the battery case and the equipment case than embodiments in which such an air layer is not formed. Moreover, in the present aspect the lower wall of the equipment case includes the projection portion, facilitating forming such an air layer.

A battery pack according to a twelfth aspect is any one of the first to the eleventh aspects, wherein the first component is the battery, and the second component is a junction block.

In the present aspect the first component is the battery and the second component is the junction block.

This thereby enables the battery and the junction block to be connected by an efficient route.

As described above, the present disclosure enables, in cases in which a housing case of a battery pack includes a battery case and an equipment case, a first component inside the battery case and a second component inside the equipment case to be connected by an efficient route.

### BRIEF DESCRIPTION OF DRAWINGS

Exemplary embodiments of the present disclosure will be described in detail based on the following figures, wherein:
Fig. 1 is a schematic side view of a vehicle installed with a battery pack;
Fig. 2 is a schematic cross-section illustrating an enlargement of a vicinity of a rear end portion of a battery pack;
Fig. 3 is a schematic cross-section illustrating a connection procedure for upper/lower connection bus bars serving as electrical connection members;
Fig. 4 is a schematic cross-section illustrating a connection completed state by upper/lower connection bus bars serving as electrical connection members;
Fig. 5 is a cross section related to a modified example illustrating an enlargement of a position where a sealing member is arranged;
Fig. 6 is a plan view illustrating a battery case and a battery;
Fig. 7 is a plan view illustrating a battery pack and an external battery equipment;
Fig. 8 is a plan view illustrating a state in which an internal battery equipment has been housed in an equipment case; and
Fig. 9 is a schematic perspective view of an internal battery equipment.

### DESCRIPTION OF EMBODIMENTS

Description follows regarding preferable exemplary embodiments of the present disclosure.

Note that as appropriate in the drawings, arrow FR indicates a vehicle forward direction, arrow UP indicates a vehicle upward direction, and arrow LH indicates a vehicle width direction left side. Moreover, when front and rear, up and down, and left and right directions are employed in the following description, unless explicitly stated otherwise, these respectively indicate front and rear in the vehicle front-rear direction, up and down in the vehicle height direction, and left and right in the vehicle width direction.

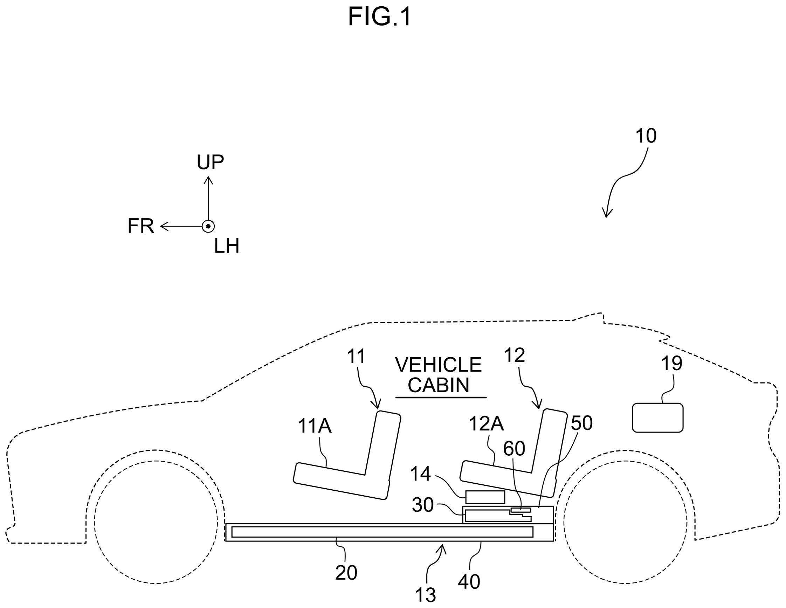

As illustrated in Fig. 1, vehicle 10 includes front seats 11 and rear seats 12 provided in a vehicle cabin. The front seats 11 are configured by a driver's seat and a front passenger seat. The rear seats 12 are, for example, a bench seat.

### Battery Pack 13

The vehicle 10 includes a battery pack 13 arranged below the vehicle cabin.

The battery pack 13 includes a battery 20, internal battery equipment 30 electrically connected to the battery 20 and plural information processing devices 60, and housing cases 40, 50 respectively housing these.

The housing cases 40, 50 include a battery case 40 housing the battery 20, and an equipment case 50 housing the internal battery equipment 30 and the plural information processing devices 60.

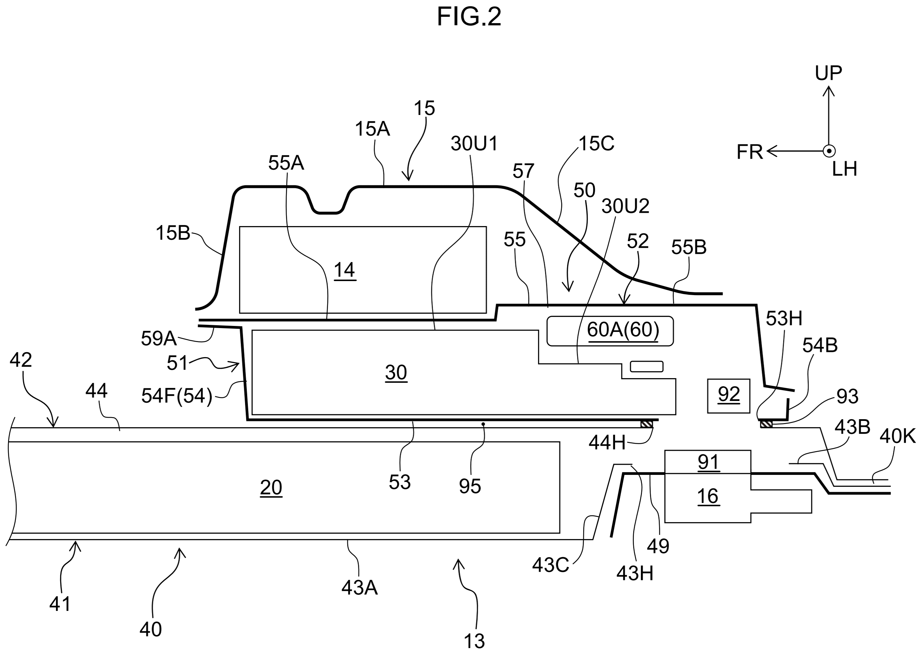

The equipment case 50 is arranged above the battery case 40 such that at least part of the equipment case 50 overlaps with at least part of the battery case 40 in plan view. Specifically, as illustrated in Fig. 2, the equipment case 50 is arranged above the battery case 40 such that the entire equipment case 50 overlaps with part of the battery case 40 in plan view.

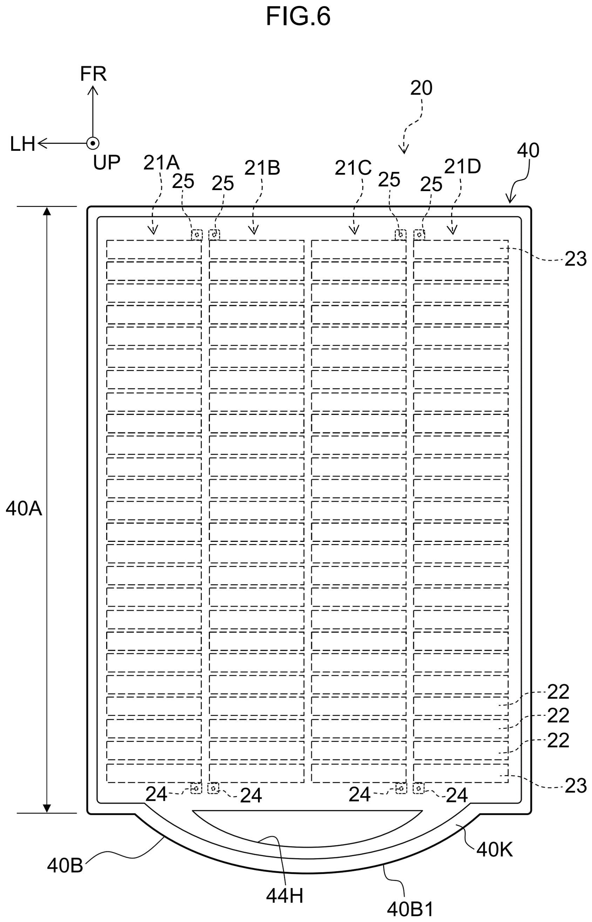

As illustrated in Fig. 6, the battery 20 is provided in a region extending in a front-rear direction (a rectangular region in plan view). As a result, as illustrated in Fig. 1, part of the battery 20 overlaps with at least part of seating faces 11A of the front seats 11 in plan view, and another part of the battery 20 overlaps with at least part of seating faces 12A of the rear seats 12 in plan view. Specifically, a front end of the battery 20 is positioned further forward than a front end of the seating faces 11A of the front seats 11. A rear end of the battery 20 is positioned further rearward than a front end of the seating faces 12A of the rear seats 12.

As illustrated in Fig. 6, the battery 20 includes plural battery modules 21A, 21B, 21C, 21D. The number of the battery modules 21 provided to the battery 20 is, for example, an even number, and is specifically four. Reference will simply be made to battery modules 21 when describing the plural battery modules 21A, 21B, 21C, 21D without particular discrimination therebetween.

The plural battery modules 21A, 21B, 21C, 21D are arranged alongside each other in the vehicle width direction. The plural battery modules 21A, 21B, 21C, 21D are configured from a first battery module 21A, a second battery module 21B, a third battery module 21C, and a fourth battery module 21D. Note that the battery 20 does not have a structure in which the battery modules 21 are arranged alongside each other in the height direction.

Each of the plural battery modules 21A, 21B, 21C, 21D includes plural battery cells 22 arranged alongside each other in the front-rear direction. The battery cells 22 each have similar configuration to each other.

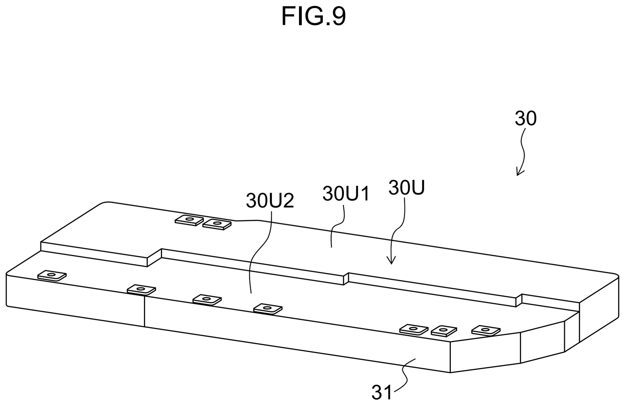

The internal battery equipment 30 is a junction block 30. As illustrated in Fig. 9, the internal battery equipment 30 includes a housing 31, and electrical components (non-illustrated) such as bus bars, relays, fuses and the like housed in the housing 31. The relays include a system main relay. Although omitted in the drawings, the housing 31 includes a lower housing and an upper housing, and is configured in an upper/lower divided structure.

As illustrated in Fig. 1 and Fig. 2, the internal battery equipment 30 is arranged above the battery 20 and below the rear seats 12 such that, in plan view, at least part thereof overlaps with at least part of the battery 20, and overlaps with at least part of the seating faces 12A of the rear seats 12. Specifically, the internal battery equipment 30 is arranged above the battery 20 and below the rear seats 12 such that part thereof overlaps with part of the battery 20 in plan view, and the entirety thereof overlaps with part of the seating face 12A of the rear seats 12 in plan view.

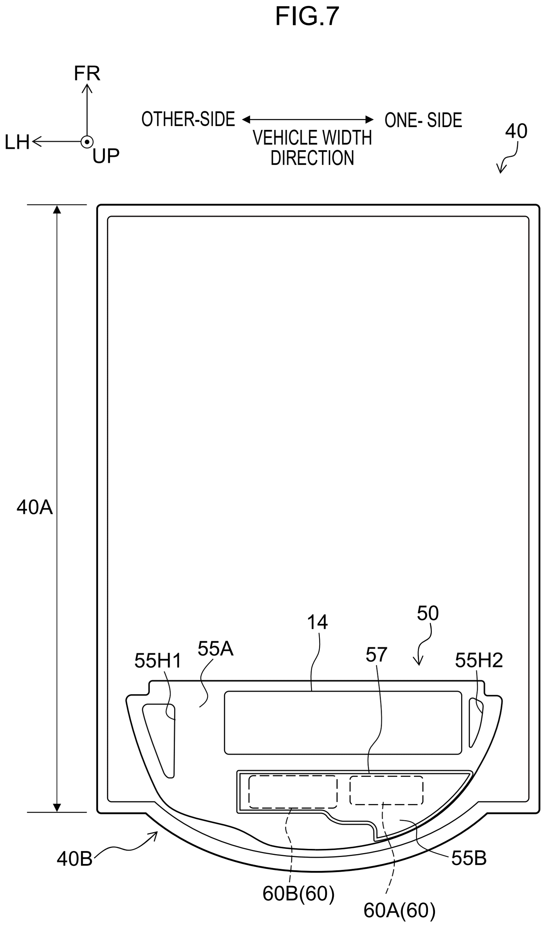

As illustrated in Fig. 7, the plural information processing devices 60 are arranged alongside each other in a vehicle width direction. The plural information processing devices 60 include a first information processing device 60A and a second information processing device 60B.

The first information processing device 60A is a battery ECU serving as a "control device". The first information processing device 60A, for example, controls relays provided in the internal battery equipment 30.

As illustrated in Fig. 2, the first information processing device 60A is arranged above the internal battery equipment 30 such that at least part thereof overlaps with at least part of the internal battery equipment 30 in plan view. Specifically, the first information processing device 60A is arranged above the internal battery equipment 30 such that the entirety thereof overlaps with part of the internal battery equipment 30 in plan view.

The second information processing device 60B receives voltage signals from plural voltage monitoring devices (omitted in the drawings), and transmits these to the first information processing device 60A after performing specific processing thereon. The voltage monitoring devices are devices to monitor the voltage of each portion of the battery 20, and configure a device also sometimes called a satellite battery module (SBM). Plural of the voltage monitoring devices are provided inside the battery case 40.

The second information processing device 60B is arranged above the internal battery equipment 30 such that at least part thereof overlaps with at least part of the internal battery equipment 30 in plan view. Specifically, although omitted in the drawings, the second information processing device 60B is arranged above the internal battery equipment 30 such that the entirety thereof overlaps with at least part of the internal battery equipment 30 in plan view.

### External Battery Equipment 14

As illustrated in Fig. 1 and Fig. 2, the vehicle 10 includes external battery equipment 14 that is arranged externally to the housing cases 40, 50, and is electrically connected to the battery pack 13.

The external battery equipment 14 is a device including a function as a so-called On-Board Charger (OBC). In other words, the external battery equipment 14 includes a function to transform externally supplied alternating current power into direct current power usable by the battery 20 of the vehicle 10. This function is exhibited when utilizing a domestic power source to charge the battery pack 13 with an appropriate voltage and current. The external battery equipment 14 also includes a DC-DC converter function.

The external battery equipment 14 is arranged above the battery pack 13 and below the rear seats 12 such that at least part thereof overlaps with at least part of the internal battery equipment 30 in plan view, and at least part thereof overlaps with at least part of the seating face 12A of the rear seats 12 in plan view.

Specifically, the external battery equipment 14 is arranged above the battery pack 13 and below the rear seats 12 such that at least part thereof overlaps with at least part of the internal battery equipment 30 in plan view, and the entirety thereof overlaps with at least part of the seating face 12A of the rear seats 12 in plan view.

As illustrated in Fig. 7, the external battery equipment 14 is arranged above the equipment case 50 such that at least part thereof overlaps with at least part of the equipment case 50 in plan view. Specifically, the external battery equipment 14 is arranged above the equipment case 50 such that the entirety thereof overlaps with at least part of the equipment case 50 in plan view.

### External Equipment Cover 15

As illustrated in Fig. 2, the vehicle 10 includes an external equipment cover 15.

The external equipment cover 15 covers the external battery equipment 14 from an upper side thereof. The external equipment cover 15 is arranged below the rear seats 12 and supports the rear seats 12. The external equipment cover 15 is, for example, formed by pressing a steel sheet material or the like.

The external equipment cover 15 includes an upper wall 15A covering the external battery equipment 14 from above, a front wall 15B covering the external battery equipment 14 from the front, and an inclined wall 15C extending diagonally rearward from the upper wall 15A.

### Detailed Description

A more detailed description follows regarding features of each configuration element.

### Battery 20

As illustrated in Fig. 6, the battery modules 21 contained in the battery 20 each include a front terminal 25 and a rear terminal 24.

The front terminal 25 of the first battery module 21A and the front terminal 25 of the second battery module 21B are connected together through a non-illustrated bus bar. The front terminal 25 of the third battery module 21C and the front terminal 25 of the fourth battery module 21D are connected together through a non-illustrated bus bar.

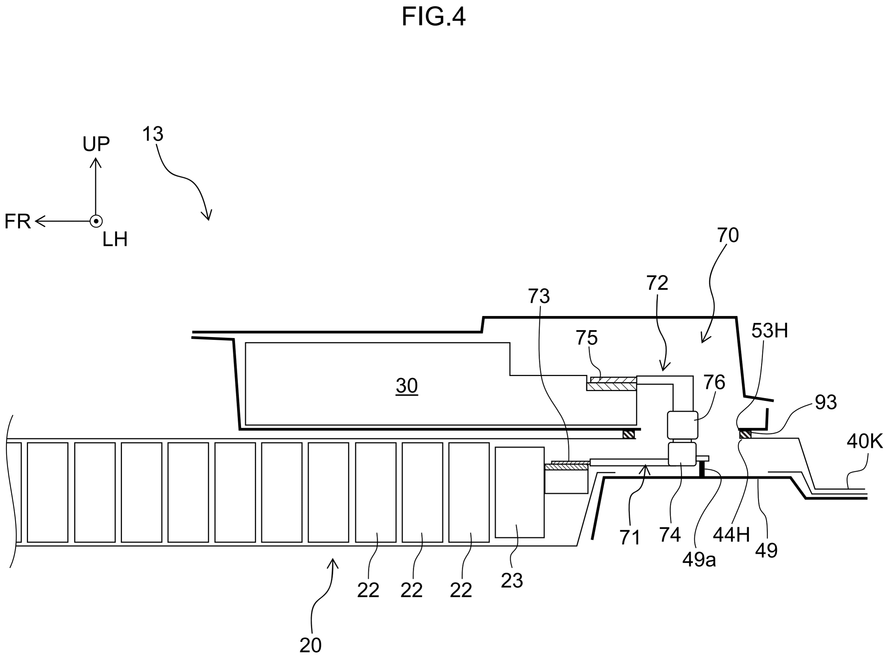

The rear terminals 24 of the battery modules 21 are electrically connected to the internal battery equipment 30 though later-described upper/lower connection bus bars 70 (see Fig. 4).

The rear terminals 24 are positioned further rearward than the rearmost battery cell 22 from out of the plural battery cells 22 provided in each of the battery modules 21. Specifically, the rear terminals 24 are positioned further rearward than a rear end member 23, from out of a front-rear pair of end members 23 provided in the battery modules 21. Note that the front-rear pair of end members 23 are members for restraining the plural battery cells 22 in a state clamped from both front and rear directions.

### Battery Case 40

The battery case 40 is formed in a box shape. The battery case 40 is positioned so as to be entirely lower than a floor surface of a vehicle cabin.

As illustrated in Fig. 6, the battery case 40 includes a battery case main body 40A, and a battery case rearward extension 40B.

The battery case main body 40A is a part where the battery 20 is housed, and the battery case rearward extension 40B is a part where the battery 20 is not housed. The battery case rearward extension 40B is provided further rearward than the battery case main body 40A. The internal space of the battery case 40 is extended rearward due to the battery case rearward extension 40B being provided. The space inside the battery case rearward extension 40B has a smaller height dimension than the space inside the battery case main body 40A.

The battery case main body 40A has a substantially rectangular profile in plan view. Specifically, the battery case main body 40A has a substantially rectangular profile in plan view, with a long edge along the front-rear direction and a short edge along the vehicle width direction.

The battery case rearward extension 40B has a shape in which a vehicle width dimension decreases on progression toward the rear side. This thereby enables the internal space of the battery case 40 to be extended while avoiding interference with configuration in the vicinity of the rear wheels of the vehicle 10. A rear side edge 40B 1 of the battery case rearward extension 40B is configured with a profile so as to have a convex bow shape toward the rear. The vehicle width direction dimension at a front end of the battery case rearward extension 40B is smaller than a vehicle width direction dimension of the battery case main body 40A. Specifically, the vehicle width direction dimension at the front end of the battery case rearward extension 40B is in a range of from 60% to 90% of the vehicle width direction dimension of the battery case main body 40A.

As illustrated in Fig. 2, the battery case 40 includes a battery case lower 41 and a battery case upper 42.

The battery case lower 41 includes a first lower wall 43A. The first lower wall 43A is provided to the battery case main body 40A. The first lower wall 43A has a shape extending in both the front-rear direction and the vehicle width direction, and is positioned directly below the battery 20.

The battery case lower 41 includes a second lower wall 43B. The second lower wall 43B is provided to the battery case rearward extension 40B. The second lower wall 43B is positioned further rearward than the first lower wall 43A. The second lower wall 43B is positioned further upward than the first lower wall 43A. The second lower wall 43B includes a connector block hole 43H.

The battery case 40 includes a connector block 49 attached to the battery case lower 41 so as to close up the connector block hole 43H. The connector block 49 is attached to the battery case lower 41 from below by fastenings or the like. The connector block 49 is, for example, a die-cast component.

The battery case lower 41 includes a connection upright wall 43C to connect a rear end of the first lower wall 43A and a front end of the second lower wall 43B together. The connection upright wall 43C extends in a direction inclined rearward on progression upward.

The battery case upper 42 includes an upper wall 44. The upper wall 44 has a shape extending in both the front-rear direction and vehicle width direction, and covers the battery 20 from above. The upper wall 44 functions as a floor panel configuring part of a floor of the vehicle cabin. This means that the vehicle 10 does not include another floor panel arranged above the upper wall 44.

The upper wall 44 includes an upper wall opening portion 44H piercing through the upper wall 44. The upper wall opening portion 44H is provided at a position corresponding to the battery case rearward extension 40B. At least part of the upper wall opening portion 44H overlaps with at least part of the connector block hole 43H in plan view.

The part of the upper wall 44 where the upper wall opening portion 44H is provided is positioned at the same height in the height direction as the part of the upper wall 44 overlapping with the battery 20 in plan view.

The battery case 40 includes a flange 40K formed where part of the battery case lower 41 and part of the battery case upper 42 are joined together. The flange 40K has a thickness direction oriented in the height direction. As illustrated in Fig. 6, the flange 40K is provided contiguously without interruption around the entire periphery of the outer edge of the battery case 40 in plan view of the battery case 40. As illustrated in Fig. 2, the flange 40K is positioned higher than the first lower wall 43A and lower than the upper wall 44. More specifically, the flange 40K is positioned lower than the second lower wall 43B.

### Equipment Case 50

As illustrated in Fig. 7, in plan view, the entire equipment case 50 overlaps with a rear side portion of the battery case 40. The part of the battery case 40 that overlaps with the equipment case 50 in plan view includes a portion of the battery case main body 40A and a portion of the battery case rearward extension 40B. A flange 40K, which is formed around an entire periphery of an outer edge of the battery case 40, does not overlap with the equipment case 50 in plan view.

In plan view, a front-side edge of the equipment case 50 extends in a straight line shape parallel to the vehicle width direction, and a rear-side edge of the equipment case 50 is curved in a bow shape convex toward the rear side. This accordingly means that, when viewed from above, the shape of the equipment case 50 is a substantially semi-circular shape.

As illustrated in Fig. 2, the equipment case 50 includes an equipment case lower 51 and an equipment case upper 52.

The equipment case lower 51 and the equipment case upper 52 are both die-cast products, specifically aluminum die-cast products.

The equipment case lower 51 is a casing having a substantially box shape open at the upper side. A space is formed inside the equipment case 50 by attaching the equipment case upper 52 to the equipment case lower 51 from above. A sealing member (omitted in the drawings) is arranged between the equipment case lower 51 and the equipment case upper 52. The equipment case 50 is accordingly configured with a structure that maintains waterproofing properties of the interior thereof.

The equipment case lower 51 includes a lower wall 53 and side walls 54.

The lower wall 53 includes a lower wall opening portion 53H that is a hole piercing through the lower wall 53. The lower wall opening portion 53H is provided such that at least part thereof overlaps with at least part of the upper wall opening portion 44H of the battery case upper 42 in plan view. Electrical connection between components inside the battery case 40, such as the battery 20 and the like, and components inside the equipment case 50, such as the internal battery equipment 30 and the like, is realized through the upper wall opening portion 44H of the battery case upper 42 and the lower wall opening portion 53H of the equipment case lower 51.

A peripheral edge portion of the upper wall opening portion 44H of the battery case upper 42, and a peripheral edge portion of the lower wall opening portion 53H of the equipment case lower 51, oppose each other in the height direction in a state clamping a sealing member 93 therebetween. The sealing member 93 is provided so as to surround the upper wall opening portion 44H and the lower wall opening portion 53H.

The lower wall 53 has a thickness direction oriented in the height direction, and extends in both the front-rear direction and the vehicle width direction. The lower wall 53 retains the internal battery equipment 30 through plural bosses (omitted in the drawings) provided to the lower wall 53, and fastenings members (omitted in the drawings).

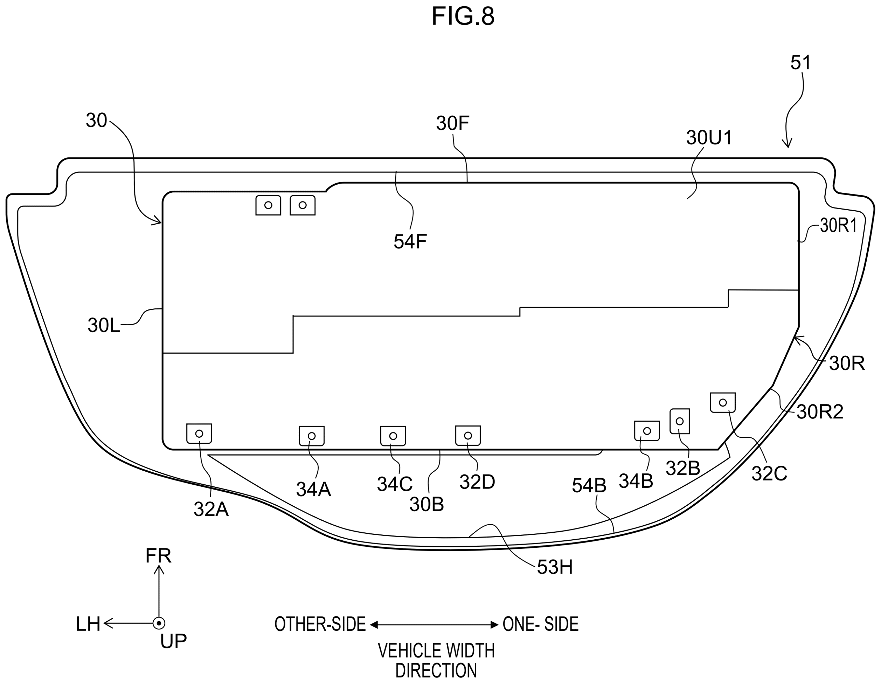

The side walls 54 include a front wall 54F. As illustrated in Fig. 8, the front wall 54F extends in a straight line shape parallel to the vehicle width direction. As illustrated in Fig. 2, the front wall 54F is provided such that part thereof overlaps with the entire internal battery equipment 30 when viewed from the front. The front wall 54F extends in a direction inclined forward on progression upward.

The side walls 54 include a rear wall 54B. As illustrated in Fig. 8, the rear wall 54B extends in a substantially circular arc shape convex on the rear side in plan view.

The equipment case upper 52 includes an upper wall 55. The upper wall 55 covers the internal battery equipment 30 from above.

As illustrated in Fig. 2 and Fig. 7, the equipment case upper 52 includes an upper bulge portion 57 bulging upward. The internal space of the equipment case 50 is extended upward at a position directly below the upper bulge portion 57 due to forming the upper bulge portion 57. The upper bulge portion 57 is provided at a position on the rear side of the equipment case upper 52.

The upper wall 55 includes a first upper wall 55A and a second upper wall 55B.

As illustrated in Fig. 7, at least part of the first upper wall 55A overlaps with at least part of the external battery equipment 14 in plan view and does not overlap with the plural information processing devices 60 in plan view. Specifically, part of the first upper wall 55A overlaps with the entire external battery equipment 14 in plan view and does not overlap with the plural information processing devices 60 in plan view.

As illustrated in Fig. 7, at least part of the second upper wall 55B overlaps with at least part of the one or more information processing devices 60 in plan view, and does not overlap with the external battery equipment 14 in plan view. Specifically, part of the second upper wall 55B overlaps with the entirety of the plural information processing devices 60 in plan view and does not overlap with the external battery equipment 14 in plan view.

The plate thickness direction of the first upper wall 55A is oriented in the height direction.

The second upper wall 55B is positioned further upward than the first upper wall 55A. The second upper wall 55B is provided to the upper bulge portion 57. The plate thickness direction of the second upper wall 55B is oriented in the height direction.

As illustrated in Fig. 7, the equipment case upper 52 includes a charging opening portion 55H1 through which wiring for charging passes. The charging opening portion 55H1 is a hole piecing through the equipment case upper 52 in the height direction. The charging opening portion 55H1 is in a state closed off by a non-illustrated connector block, charging connector, or the like. The charging opening portion 55H1 is provided at a position further to a vehicle width direction other-side than the center of the equipment case upper 52, specifically in a vicinity of an end portion on the vehicle width direction other-side of the equipment case upper 52.

As illustrated in Fig. 7, the equipment case upper 52 includes a communication opening portion 55H2 through which communication wiring passes. The communication wiring is, for example, wiring to electrically connect between the first information processing device 60A (battery ECU) inside the equipment case 50, and a vehicle body side ECU (omitted in the drawings) provided outside the battery pack 13. The communication opening portion 55H2 is a hole piecing through the equipment case upper 52 in the height direction. The communication opening portion 55H2 is in a state closed off by a non-illustrated connector block, communication connector, or the like. The communication opening portion 55H2 is provided at a position further to the vehicle width direction one-side than the center of the equipment case upper 52, specifically in a vicinity of an end portion on the vehicle width direction one-side of the equipment case upper 52.

### Internal Battery Equipment 30

As illustrated in Fig. 8, the internal battery equipment 30 includes the plural (four) battery connection sections 32A, 32B, 32C, 32D respectively connected to the plural upper/lower connection bus bars 70, described later. The internal battery equipment 30 is electrically connected to the battery 20 through the plural (four) upper/lower connection bus bars 70.

The plural battery connection sections 32A, 32B, 32C, 32D are provided to a rear section of the internal battery equipment 30 when the internal battery equipment 30 is treated as being split into an internal battery equipment 30 front section and an internal battery equipment 30 rear section. Specifically, the plural battery connection sections 32A, 32B, 32C, 32D are provided in the vicinity of a rear edge of the internal battery equipment 30.

The battery connection sections 32A, 32B, 32C, 32D are configured so as to enable upper bus bars 72 of the upper/lower connection bus bars 70 to be connected to the battery connection sections 32A, 32B, 32C, 32D from above.

The plural battery connection sections 32A, 32B, 32C, 32D are configured from a first battery connection section 32A, a second battery connection section 32B, a third battery connection section 32C, and a fourth battery connection section 32D.

The internal battery equipment 30 includes plural supply connection sections 34A, 34B, 34C. The plural supply connection sections 34A, 34B, 34C are electrically connected to cable connectors 16, described later, through bus bars or the like.

The plural supply connection sections 34A, 34B, 34C are provided to the internal battery equipment 30 rear section when the internal battery equipment 30 is treated as being split into an internal battery equipment 30 front section and an internal battery equipment 30 rear section. Specifically, the plural supply connection sections 34A, 34B, 34C are provided in the vicinity of the rear edge of the internal battery equipment 30.

The internal battery equipment 30 includes a front face 30F, a rear face 30B, a vehicle width direction one-side face 30R, and a vehicle width direction other-side face 30L.

The rear face 30B of the internal battery equipment 30 faces rearward and extends parallel to the vehicle width direction. A vehicle width direction one-side end of the rear face 30B of the internal battery equipment 30 is positioned further toward the vehicle width direction other-side than the vehicle width direction one-side end of the front face 30F of the internal battery equipment 30. The vehicle width direction other-side end of the rear face 30B of the internal battery equipment 30 is positioned at the same position in the vehicle width direction to the vehicle width direction other-side end of the front face 30F of the internal battery equipment 30.

The vehicle width direction one-side face 30R of the internal battery equipment 30 includes a front portion 30R1 and a rear portion 30R2. The front portion 30R1 of the vehicle width direction one-side face 30R extends parallel to the front-rear direction, and the rear portion 30R2 of the vehicle width direction one-side face 30R extends in a direction inclined toward the vehicle width direction other-side on progression rearward. The rear portion 30R2 of the vehicle width direction one-side face 30R is arranged following a portion of the rear wall 54B of the equipment case 50 that extends in a substantially circular arc shape in plan view and in close proximity to this portion. A spacing between the front portion 30R1 of the vehicle width direction one-side face 30R and the rear wall 54B of the equipment case 50 is wider than a spacing between the rear portion 30R2 of the vehicle width direction one-side face 30R and the rear wall 54B of the equipment case 50 that extends in a substantially circular arc shape in plan view.

The entire vehicle width direction other-side face 30L of the internal battery equipment 30 extends parallel to the front-rear direction. The vehicle width direction other-side face 30L connects a vehicle width direction other-side end of the front face 30F to a vehicle width direction other-side end of the rear face 30B in the front-rear direction.

The internal battery equipment 30 is arranged inside the equipment case 50 in a region shifted toward the vehicle width direction one-side. This means that from out of the space inside the equipment case 50, a space that overlaps with the internal battery equipment 30 in side view and that is a space further to the vehicle width direction other-side than the internal battery equipment 30 is a space wider than a space that overlaps with the internal battery equipment 30 in side view and that is a space further to the vehicle width direction one-side than the internal battery equipment 30. Charging wiring, such as a non-illustrated charging bus bar, is installed in the wider space.

As illustrated in Fig. 9, the upper face 30U of the internal battery equipment 30 includes a first upper face 30U1 and a second upper face 30U2.

The second upper face 30U2 is provided further rearward than the first upper face 30U1. Specifically, the first upper face 30U1 is an upper face of a front section of the internal battery equipment 30, and the second upper face 30U2 is an upper face of a rear section of the internal battery equipment 30. The second upper face 30U2 is positioned lower than the first upper face 30U1. The internal battery equipment 30 is accordingly formed with a height of the rear section being lower than that of the front section.

The first upper face 30U1 does not overlap with the plural information processing devices 60 in plan view.

In plan view, at least part of the second upper face 30U2 overlaps with at least part of the plural information processing devices 60. Specifically, part of the second upper face 30U2 overlaps with the entire first information processing device 60A in plan view, and part of the second upper face 30U2 overlaps with the entire second information processing device 60B in plan view.

### External Battery Equipment 14

The external battery equipment 14 is electrically connected to the battery pack 13 through a non-illustrated harness or the like. This electrical connection is performed through the charging opening portion 55H1 of the equipment case upper 52.

### Upper/Lower Connection Bus Bars 70

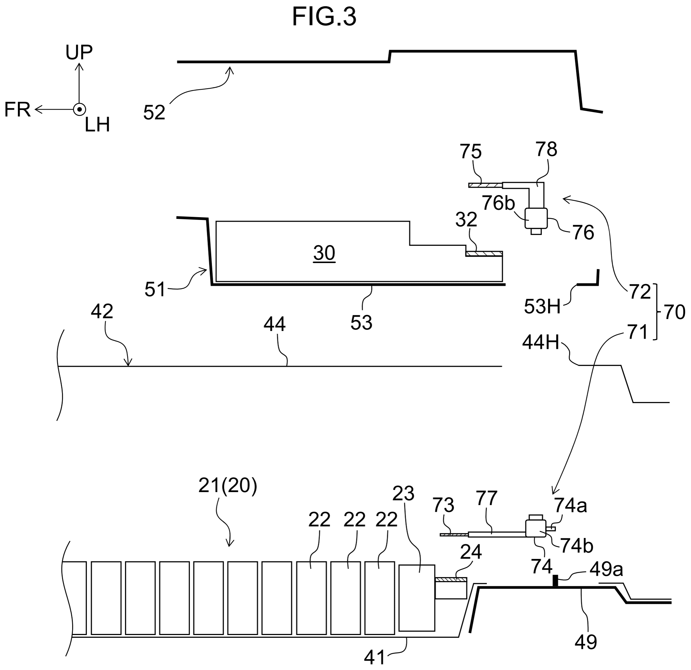

As illustrated in Fig. 3 and Fig. 4, the battery pack 13 includes the upper/lower connection bus bars 70 for electrically connecting the battery 20 and the internal battery equipment 30 together. The upper/lower connection bus bars 70 are sometimes called electrical connection members 70 below.

Plural (four) of the upper/lower connection bus bars 70 are provided. This means that the same number of the upper/lower connection bus bars 70 are provided as the number of battery modules 21 provided in the battery 20.

Although not individually illustrated in the drawings, the plural upper/lower connection bus bars 70 are configured from a first upper/lower connection bus bar 70A, a second upper/lower connection bus bar 70B, a third upper/lower connection bus bar 70C, and a fourth upper/lower connection bus bar 70D.

The first upper/lower connection bus bar 70A electrically connects the rear terminal 24 of the first battery module 21A and the first battery connection section 32A of the internal battery equipment 30 together.

The second upper/lower connection bus bar 70B electrically connects the rear terminal 24 of the second battery module 21B and the second battery connection section 32B of the internal battery equipment 30 together.

The third upper/lower connection bus bar 70C electrically connects the rear terminal 24 of the third battery module 21C and the third battery connection section 32C of the internal battery equipment 30 together.

The fourth upper/lower connection bus bar 70D electrically connects the rear terminal 24 of the fourth battery module 21D and the fourth battery connection section 32D of the internal battery equipment 30 together.

They will simply be referred to as upper/lower connection bus bars 70 when describing common features below without particular discrimination therebetween.

The upper/lower connection bus bars 70 each include a lower bus bar 71 attached to the battery 20, and an upper bus bar 72 attached to the internal battery equipment 30. The lower bus bar 71 is sometimes referred to as a first connection member 71 below, and the upper bus bar 72 is sometimes referred to as a second connection member 72 below.

The lower bus bar 71 includes a battery side connection section 73 connected to the battery 20, and a lower connector section 74 connected to the upper bus bar 72. The battery side connection section 73 is sometimes referred to as a first side connection section 73 below, and the lower connector section 74 is sometimes referred to as a first side connector section 74 below.

The upper bus bar 72 includes an equipment side connection section 75 connected to the internal battery equipment 30, and an upper connector section 76 connected to the lower connector section 74. The equipment side connection section 75 is sometimes referred to as a second side connection section 75 below, and the upper connector section 76 is sometimes referred to as a second side connector section 76 below.

Specifically, the battery side connection section 73 of the lower bus bar 71 is connected to the rear terminal 24 of the battery module 21. The equipment side connection section 75 of the upper bus bar 72 is connected to a battery connection section 32 of the internal battery equipment 30.

The upper connector section 76 is connected to the lower connector section 74 from above. Namely, the direction of connection between the lower connector section 74 and the upper connector section 76 is the height direction. The lower connector section 74 and the upper connector section 76 are arranged further rearward than the battery 20 and the internal battery equipment 30 so as not to overlap with the battery 20 and the internal battery equipment 30 in plan view.

Note that the rear terminals 24 and the battery connection sections 32 that are electrically connected by the upper/lower connection bus bars 70 are positioned at different positions to each other in the vehicle width direction. Namely, the upper/lower connection bus bars 70 are configured so as to electrically connect together rear terminals 24 and battery connection sections 32 that are positioned at different positions to each other in the vehicle width direction. Fig. 3 and Fig. 4 are schematic diagrams, and the battery side connection sections 73 and the lower connector sections 74 are positioned at different positions in the vehicle width direction, and the equipment side connection sections 75 and the upper connector sections 76 are positioned at different positions in the vehicle width direction.

Each of the lower bus bars 71 and the upper bus bars 72 includes a bus bar main body formed from a conductive material such as copper, aluminum, or the like, and an insulating member covering the bus bar main body. Specifically, in the lower bus bar 71, the bus bar main body is not exposed at least at parts other than at the battery side connection section 73 and, in the upper bus bar 72, the bus bar main body is not exposed at least at parts other than at the equipment side connection section 75.

In other words, the lower bus bar 71 includes a lower bus bar cover 77 that has insulation properties and covers the bus bar main body. The lower connector section 74 also includes a lower connector housing 74b having insulation properties.

The upper bus bar 72 includes an upper bus bar cover 78 that has insulation properties and covers the bus bar main body. The upper connector section 76 includes an upper connector housing 76b having insulation properties.

Connecting the lower connector section 74 and the upper connector section 76 together means that there is no need to add an additional member, and achieves a configuration so as not to expose the bus bar main body (electrically active section).

The lower connector section 74 includes a fixed portion 74a for fixing to the housing cases 40, 50. This thereby enables the lower connector section 74 side of the lower bus bar 71 to be prevented from being a free end. The part of the housing cases 40, 50 for fixing the fixed portion 74a is on the battery case 40, and more specifically is the connector block 49 of the battery case 40. The connector block 49 includes a fixing portion 49a for fixing the fixed portion 74a. Note that the upper connector section 76 is fixed due to being connected to the lower connector section 74, and so does not include a fixed portion such as the fixed portion 74a.

A procedure to connect the upper/lower connection bus bars 70 is broadly as follows.
(1) Arrange the battery 20 in the battery case lower 41.
(2) Connect the lower bus bar 71 to the battery 20 and also fix the lower bus bar 71 to the connector block 49.
(3) Close the battery case lower 41 using the battery case upper 42, and arrange the equipment case lower 51 housing the internal battery equipment 30 above the battery case 40.
(4) Connect the upper bus bar 72 to the internal battery equipment 30 and also connect the upper bus bar 72 to the lower bus bar 71.

### Cable Connecters 16

As illustrated in Fig. 2, the vehicle 10 includes the plural cable connectors 16 that are connected to the battery pack 13 for supplying electrical power to each vehicle section. The plural cable connectors 16 will be simply referred to as cable connector 16 when describing common features thereof, without particularly discriminating therebetween.

The cable connector 16 is attached below a vehicle rear end portion of the battery pack 13. Specifically, the cable connector 16 is attached, from below, to a part of the housing cases 40, 50 further rearward than the battery 20. Specifically, the cable connector 16 is attached, from below, to a part of the battery case 40 corresponding to the connector block 49. The cable connector 16 is attached to is to terminals of a cable (omitted in the drawings).

A direction of connection of the cable connector 16 to the battery pack 13 is the vehicle upward direction. Specifically, the battery pack 13 includes an internal connector 91 connected to the cable connector 16. The internal connector 91 is fixed to the connector block 49. The cable connector 16 is connected to the internal connector 91 of the battery pack 13 from below. Note that the internal connector 91 is electrically connected to the internal battery equipment 30 through a non-illustrated bus bar, a power distribution unit 92, described later, and the like.

The cable connector 16 is arranged so as not to project further downward than a lower face of the first lower wall 43A of the battery case 40.

### Power Distribution Unit 92

As illustrated in Fig. 2, the battery pack 13 includes the power distribution unit 92 housed in the housing cases 40, 50.

The power distribution unit 92 is connected to the supply connection sections 34A, 34B, 34C of the internal battery equipment 30 through non-illustrated bus bars, and is connected to the plural internal connectors 91 through non-illustrated bus bars. This means that the power distribution unit 92 functions so as to distribute power using the plural provided cable connectors 16.

The power distribution unit 92 is arranged further rearward than the battery 20 and the internal battery equipment 30 so as not to overlap with the battery 20 and the internal battery equipment 30 in plan view.

The power distribution unit 92 is arranged at the rear of the internal battery equipment 30 such that at least part thereof overlaps with at least part of the internal battery equipment 30 when viewed from the front.

### Assembly to Vehicle Body Framework Task

The battery pack 13, the external battery equipment 14, and the external equipment cover 15 are integrated together as a single body prior to being assembled to the vehicle body framework. Then, in a state in which the battery pack 13, the external battery equipment 14, the external equipment cover 15, and the like have been integrated together as a single body, they are assembled, from below, to the vehicle body framework including a left-right pair of rockers (side sills).

### Operation and Advantageous Effects

Next, description follows regarding the operation and advantageous effects of the present exemplary embodiment.

In the present exemplary embodiment, as illustrated in Fig. 1 and Fig. 2, the battery pack 13 includes the battery case 40 housing the battery 20, and the equipment case 50 arranged above the battery case 40 such that at least part thereof overlaps with at least part of the battery case 40 in plan view.

In the battery pack 13 as described above, a need arises to electrically connect a first component 20 inside the battery case 40 and a second component 30 inside the equipment case 50 together.

Thus in the present exemplary embodiment, as illustrated in Fig. 4, the battery pack 13 includes the electrical connection members 70 configuring at least part of the wiring connecting the first component 20 inside the battery case 40 and the second component 30 inside the equipment case 50 together. The battery case 40 includes the upper wall 44 provided with the upper wall opening portion 44H, and the equipment case 50 includes the lower wall 53 provided with the lower wall opening portion 53H, with the electrical connection members 70 provided so as to pass through both the upper wall opening portion 44H and the lower wall opening portion 53H.

This thereby enables the first component 20 inside the battery case 40 and the second component 30 inside the equipment case 50 to be connected by an efficient route.

Moreover, in the present exemplary embodiment, as illustrated in Fig. 3, the electrical connection members 70 each include the first connection member 71 attached to a first component 20 side member 20, and the second connection member 72 attached to a second component 30 side member 30.

This means that the electrical connection member 70 can be divided into the first connection member 71 and the second connection member 72, enabling a task of connecting the first component 20 side member 20 and the second component 30 side member 30 together to be made easy.

Moreover, in the present exemplary embodiment, the first connection member 71 is a bus bar, and the second connection member 72 is a bus bar.

This means that they are, for example, appropriate for flowing large currents.

Moreover, in the present exemplary embodiment, as illustrated in Fig. 3, the first connection member 71 includes the first side connection member 73 connected to the first component 20 side member 20, and the first side connector section 74 connected to the second connection member 72. The second connection member 72 includes the second side connection section 75 connected to the second component 30 side member 30, and the second side connector section 76 connected to the first side connector section 74.

The second side connector section 76 is connected to the first side connector section 74 from above.

This means that a task of connecting the second side connector section 76 to the first side connector section 74 can be made easy.

Moreover, in the present exemplary embodiment, as illustrated in Fig. 4, the first side connector section 74 and the second side connector section 76 are arranged so as not to overlap with the first component 20 and the second component 30 in plan view.

This means that there is no need to provide a space for arranging the first side connector section 74 and the second side connector section 76 in a region overlapping with the first component 20 or the second component 30 in plan view, enabling the first component 20 and the second component 30 to be arranged in close proximity to each other in the height direction.

Moreover in the present exemplary embodiment, as illustrated in Fig. 4, the connectors 74, 76 configured by the first side connector section 74 and the second side connector section 76 are arranged so as to straddle between the inside of the battery case 40 and the inside of the equipment case 50 in a state passing through both the upper wall opening portion 44H and the lower wall opening portion 53H.

This means that the spaces inside the upper wall opening portion 44H and the lower wall opening portion 53H can be utilized for placement of the connectors 74, 76.

Moreover in the present exemplary embodiment, as illustrated in Fig. 4, the upper wall opening portion 44H and the lower wall opening portion 53H connect a space rearward of the space in the battery case 40 where the battery 20 is arranged, and a space rearward of the space in the equipment case 50 where the junction block 30 is arranged, together in the height direction.

This thereby enables these spaces to be utilized efficiently for performing electrical connection.

Moreover, in the present exemplary embodiment, as illustrated in Fig. 4, the battery pack 13 includes the sealing member 93 arranged between the upper wall 44 of the battery case 40 and the lower wall 53 of the equipment case 50. The sealing member 93 is provided so as to surround the upper wall opening portion 44H and the lower wall opening portion 53H.

This thereby enables the waterproofing properties of the battery case 40 and the equipment case 50 to be secured.

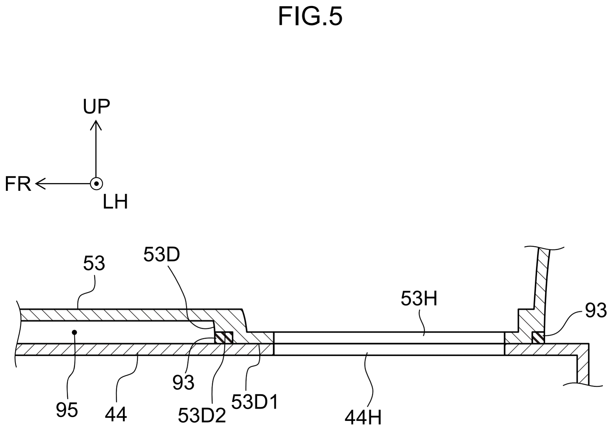

Note that in the present exemplary embodiment, as illustrated in Fig. 5, the lower wall 53 of the equipment case 50 may include a projection portion 53D that projects downward at positions surrounding the lower wall opening portion 53H. Such cases enable waterproofing properties to be easily secured at the periphery of the upper wall opening portion 44H and the lower wall opening portion 53H.

Furthermore, as illustrated in Fig. 5, the projection portion 53D may include a main body 53D1 that either contacts or is in close proximity to the upper wall 44 of the battery case 40, and a recess face 53D2 provided on the opposite side of the main body 53D1 to the lower wall opening portion 53H. The sealing member 93 may be arranged mainly at a position corresponding to the recess face 53D2.

Moreover, in the present exemplary embodiment, as illustrated in Fig. 2, an air layer 95 is formed between the upper wall 44 of the battery case 40 and the lower wall 53 of the equipment case 50.

This thereby enables a better heat insulation effect to be obtained between the battery case 40 and the equipment case 50 than embodiments in which the air layer 95 is not formed in this manner. Moreover, such an air layer 95 is easily formed in cases in which the projection portion 53D is provided to the lower wall 53 of the equipment case 50 (see Fig. 5).

Moreover in the present exemplary embodiment, the first component 20 is the battery 20, and the second component 30 is the junction block 30.

This thereby enables the battery 20 and the junction block 30 to be connected together by an efficient route.

Moreover in the present exemplary embodiment, as illustrated in Fig. 4, a height direction central position of the connectors 74, 76 configured by the first side connector section 74 and the second side connector section 76 is positioned inside the battery case 40. This thereby enables the space inside the equipment case 50 to be widened.

However, the height direction central position of the connectors 74, 76 may be arranged so as to be positioned inside the equipment case 50. The space inside the battery case 40 can be widened in such cases.

Preferable exemplary embodiments of the present disclosure have been described above, however the present disclosure is not limited to the above description.

### Explanation of Reference Numerals

- 10: vehicle

- 13: battery pack
- 20: battery (first component)
- 30: junction block (internal battery equipment, second component)
- 40: battery case
- 44: upper wall
- 44H: upper wall opening portion
- 50: equipment case
- 53: lower wall
- 53H: lower wall opening portion
- 53D: projection portion
- 70: upper/lower connection bus bar (electrical connection member)
- 71: lower bus bar (first connection member)
- 72: upper bus bar (second connection member)
- 73: battery side connection section (first side connection section)
- 74: lower connector section (first side connector section)
- 74a: fixed portion
- 75: equipment side connection section (second side connection section)
- 76: upper connector section (second side connector section)
- 93: sealing member
- 95: air layer

## Claims

1. A battery pack for installation in a vehicle, the battery pack comprising:
a battery case housing a battery;
an equipment case arranged above the battery case such that at least part of the equipment case overlaps with at least part of the battery case in plan view; and
an electrical connection member configuring at least part of wiring for connecting a first component inside the battery case to a second component inside the equipment case, wherein:
the battery case includes an upper wall provided with an upper wall opening portion;
the equipment case includes a lower wall provided with a lower wall opening portion; and
the electrical connection member is provided so as to pass through both the upper wall opening portion and the lower wall opening portion.

2. The battery pack of claim 1, wherein the electrical connection member includes:
a first connection member attached to a member on the first component side; and
a second connection member attached to a member on the second component side.

3. The battery pack of claim 2, wherein:
the first connection member is a bus bar; and
the second connection member is a bus bar.

4. The battery pack of claim 2, wherein:
the first connection member includes
a first side connection section connected to the first component side member, and
a first side connector section connected to the second connection member;
the second connection member includes
a second side connection section connected to the second component side member, and
a second side connector section connected to the first side connector section; and
the second side connector section is connected to the first side connector section from above.

5. The battery pack of claim 4, wherein:
the first side connector section and the second side connector section are arranged so as not to overlap with the first component and the second component in plan view.

6. The battery pack of claim 4, wherein:
the first side connector section includes a fixed portion fixed to the battery case.

7. The battery pack of claim 4, wherein:
a connector configured by the first side connector section and the second side connector section is arranged so as to straddle between inside the battery case and inside the equipment case in a state passing through both the upper wall opening portion and the lower wall opening portion.

8. The battery pack of claim 1, wherein:
the upper wall opening portion and the lower wall opening portion connect a space rearward of a space inside the battery case where the battery is arranged, and a space rearward of a space inside the equipment case where a junction block is arranged, together in a height direction.

9. The battery pack of claim 1, wherein:
the battery pack further comprises a sealing member arranged between the upper wall of the battery case and the lower wall of the equipment case; and
the sealing member is provided so as to surround the upper wall opening portion and the lower wall opening portion.

10. The battery pack of claim 9, wherein:
the lower wall of the equipment case includes a projection portion projecting downward at positions surrounding the lower wall opening portion.

11. The battery pack of claim 10, wherein:
an air layer is formed between the upper wall of the battery case and the lower wall of the equipment case.

12. The battery pack of claim 1, wherein:
the first component is the battery; and
the second component is a junction block.
